# EUROPEAN PATENT APPLICATION

(11) **EP 0 903 692 A2**
(43) Date of publication of application: **24.03.1999**
(21) Application number: 98307194.5
(22) Date of filing: 07.09.1998
(51) Int. Cl.: G06T 3/40

(54) **System and method for two-dimensional interpolation**

(30) Priority: 23.09.1997 US 59759 P
(71) Applicant: XEROX CORPORATION, Rochester, New York 14644 (US)
(72) Inventor: Choi, Yungran, Webster, New York 14580 (US); Williams, Leon C., Walworth, New York 14568 (US); Ziobro, James M., Rochester, New York 14620 (US)
(74) Representative: Skone James, Robert Edmund

(57) **Abstract**

An image processing system scales the size of an image represented by a plurality of input video signals, by a desired scaling ratio, so as to represent the image with a plurality of output video signals different in number than the input video signals. The system includes a control circuit (52) for producing a scale factor and a scale factor valid signal and a video signal magnitude calculating circuit (50), responsive to the scale factor and scale factor valid signal from the control means, for producing an output video signal as a function of at least one input video signal. The control circuit (52) requests a next input scanline to be received by the video signal magnitude calculating circuit (50) when the video signal magnitude calculating circuit produces the output video signal so as to transfer input scanlines to the video signal magnitude calculating circuit at a non-constant video rate.

## Description

The present invention is directed to an image processing system for scaling the size of an image represented by a plurality of input video signals, by a desired scaling ratio, so as to represent the image with a plurality of output video signals different in number than the input video signals, for example for implementing two-dimensional interpolation in a digital reprographic system. More particularly, the present invention is directed to a system and method with increases the speed in which two-dimensional interpolation is carried out.

The features of the present invention may be used in the printing arts and, more particularly, in digital image processing and electrophotographic printing. In digital image processing, there is a distinct advantage to being able to electronically magnify or reduce the digital data. While the desirability of electronic scaling may be apparent, few techniques, if any, operate without incurring some loss in the accuracy of the output or scaled image signals, or a severe degradation in the rates at which the signals are processed.

The loss of accuracy generally occurs in two ways. The first is through the mathematical error introduced when a fractional value is represented using a binary value of limited size. For example, representing the fractional value of one-fifth with only three binary digits would require "rounding" the fraction to the nearest eighth, or 0.250, thereby introducing significant error. The second way error occurs is through the generation of modified video signal when, in actuality, an input video signal should have simply been passed through the system to produce the output signal. In other words, the image scaling system failed to recognize an input image signal that correspond exactly with the position of an output image signal and, therefore, should have passed the input signal directly through the system without modification.

Various techniques have been proposed for image scaling. One such technique is described in US Patent Number 5,237,432. The entire contents of US Patent Number 5,237,432 are hereby incorporated by reference.

These various image scaling techniques run the video capture and processing hardware at a predetermined video rate up to the image scaling circuitry and thereafter increasing or decreasing the video rate. Hence, the hardware is designed for a specific operating speed, without having to continuously respond to changes in signal timing or frequency. Accordingly, these techniques run at a single speed, notwithstanding the speed at which the video being captured. This single speed model creates a productivity barrier as the image processing speeds increase and the demand for faster digital reprographic systems.

The present invention seeks to overcome speed limitations found in the conventional techniques and commercially available products by providing a system or method wherein the period of the input scanline can be varied to generate a synchronous output scanline operation.

One aspect of the present invention is an image processing system for scaling the size of an image represented by a plurality of input video signals, by a desired scaling ratio, so as to represent the image with a plurality of output video signals different in number than the input video signals. The system includes control means for producing a scale factor and a scale factor valid signal and video signal magnitude calculating means, responsive to the scale factor and scale factor valid signal from the control means, for producing an output video signal as a function of at least one input video signal. The control means requests a next input scanline to be received by the video signal magnitude calculating means when the video signal magnitude calculating means produces the output video signal so as to transfer input scanlines to the video signal magnitude calculating means at a non-constant video rate.

A second aspect of the present invention is a method for efficiently scaling the size of an image represented by a plurality of input video signals. The method produces a scale factor and a scale factor valid signal, produces an output video signal as a function of at least one input video signal based on the scale factor and scale factor valid signal, and requests a next input scanline to be scaled when the output video signal is produced so as to transfer input scanlines for scaling at a non-constant video rate.

Further objects and advantages of the present invention will become apparent from the following descriptions of the various embodiments and characteristic features of the present invention.

The following is a brief description of each drawing used to describe the present invention, and thus, are being presented for illustrative purposes only and should not be limitative of the scope of the present invention, wherein:
Figure 1 is a general schematic illustration of an image processing hardware module that could provide a suitable embodiment for the present invention;
Figure 2 is a general block diagram illustrating the two primary components as they would be incorporated into the image processing hardware module of Figure 1 to enable the scaling of a digital image;
Figure 3 is a hardware block diagram illustrating the hardware components used for the implementation of the scaling control component of Figure 2;
Figure 4 is a hardware block diagram illustrating the hardware components used for the implementation of the pixel magnitude calculation component of Figure 2;
Figure 5 is a block diagram illustrating an embodiment of the present invention wherein a single interpolation apparatus is used to control scaling in two dimensions;
Figure 6 is a representation of the timing diagram between the input and output signals of a conventional image scaling technique; and,
Figure 7 is a representation of a timing diagram between the input and output signals of the imaging scaling technique according to the concepts of the present invention.

The following description includes references to slowscan and fastscan digital image data when discussing the orientation of the window coordinates and sampled signals used by the background determination circuitry. For purposes of clarification, data collected along a fastscan direction is intended to refer to individual pixels located in succession along a raster of image information, while data collected in the slowscan direction refers to data derived from a common raster position across multiple rasters or scanlines.

As an example, slowscan data would be used to describe signals captured from a plurality of elements along a linear photosensitive array, as the array is moved relative to a document. On the other hand, fastscan data would refer to the sequential signals collected along the length of the linear photosensitive array during a single exposure period, and is also commonly referred to as a raster of data.

The following description also includes references to video image signals, or pixels, which are generally digital voltage representations of the image, as provided from a suitable source. For example, the image pixels may be obtained through line by line scanning of an image bearing original by one or more photosensitive elements, such as a multiple photosite array of charge coupled devices, commonly referred to as CCD's. Line by line scanning of an image bearing original for the deviation of image data is well known and does not form a part of the present invention. Furthermore, for the purposes of the following description, it will be assumed that the video signals are digital signals or pixels that fall within a particular domain of values representing a greyscale, where the lower signal levels generally represent regions of an image having content, as opposed to background regions which will generally be reflected by high signal levels.

In the following description, the present invention will be described with respect to an embodiment in which it is used to achieve interpolated scaling of a raster, or scanline, of image signals. However, there is no intention to limit the present invention to a one-dimensional embodiment. The invention is described in this manner merely to facilitate the understanding of the operation thereof. Hence, the present invention is equally suitable for use in a two-dimensional embodiment, where the pixels, as well as the rasters, are selected and interpolated in accordance with the output of one or more interpolation apparatus, hereafter described.

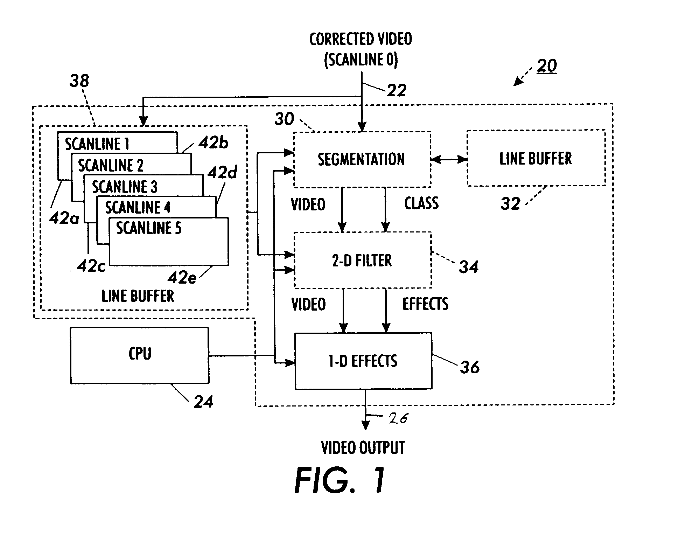

For a general understanding of an image processing hardware module incorporating the features of the present invention, reference is made to the drawings. In the drawings, like reference numerals have been used throughout to designate identical elements. Figure 1 schematically depicts some of the possible components of a digital image processing hardware module, such as might be used in an electrophotographic system for the processing and analysis of a video signal prior to its output.

Referring now to Figure 1, which illustrates a possible image processing module architecture which would suitably embody the present invention, image processing module 20 would generally receive offset and gain corrected video on input line 22. The video input data may be derived from a number of sources, including a raster input scanner, a graphics workstation, or electronic memory and similar storage elements. Moreover, the video input data in the present embodiment generally comprises 8-bit gray data, passed in a parallel fashion along the input data or video bus. Subsequently, module 20 would process the input video data according to control signals from CPU 24 to produce the output video signals on line 26. As illustrated, module 20 may include an optional segmentation block 30, which has an associated line buffer 32, two-dimensional filter 34, and an optional one-dimensional effects block, 36. Also included in module 20 is line buffer memory 38, comprising individual scanline buffers 42a-42e, for storing the context of incoming scanlines, (buffers 42a-42c contain the actual image data and 42d and 42e contain effect pointer data).

Segmentation block 30, in conjunction with associated scanline buffer 32, which provides at least one scanline of storage, is intended to parse the incoming video data to automatically determine those areas of the image which are representative of a halftone input region. Output from the segmentation block (Video Class) is used to implement subsequent image processing effects in accordance with the type or class of video signals identified by the segmentation block.

For example, the segmentation block may identify a region containing data representative of an input halftone image, in which case a low pass filter would be used to remove screen patterns, otherwise, a remaining text portion of the input video image may be processed with an edge enhancement filter to improve fine line and character reproduction when thresholded. Further details of segmentation block 30 may be found in US Patent Number 4,811,115 which teaches the use of an approximate autocorrelation function to determine the frequency of a halftone image area.

One important aspect of incorporating the segmentation block in the image processing module is the requirement for a one scanline delay in video output. This requirement stems from the fact that the segmentation block needs to analyze the incoming line prior to determining the characteristics of the incoming video. Hence, the incoming corrected video is fed directly to segmentation block 30, while being delayed for subsequent use by two-dimensional filter 34, in line buffer memory 38.

Two-dimensional filter block 34, is intended to process the incoming, corrected video in accordance with a predetermined filtering selection. As illustrated by line buffer memory 38, up to a total of 5 scanlines of incoming video data may be used to establish the context upon which the two-dimensional filter is to operate. Subsequent to two-dimensional filtering, the optional one-dimensional effects block is used to alter the filtered, or possibly unfiltered, video data in accordance with selected one-dimensional video effects. One-dimensional video effects include, for example, thresholding, screening, inversion, tonal reproduction curve (TRC) adjustment, pixel masking, one-dimensional scaling, and other effects which may be applied to the stream of video signals in a one-dimensional or fast-scan orientation. As in the two-dimensional filter, the one-dimensional effects block also includes a bypass channel, where no additional effects would be applied to the video, thereby enabling the 8-bit filtered video to be passed through as output video.

Control of the various combinations of "effects" and filter treatments to be applied to the video stream is enacted by CPU 24. Through the establishment of window tiles, various processing methods can be controlled by directly writing to control memory, from which the operation of the image processing blocks is regulated. More specifically, independent portions of the incoming video stream, portions selectable on a pixel by pixel basis, are processed in accordance with predefined image processing parameters. The selection of the specific parameters may be accomplished by selectively programming the features prior to or during the processing of the video stream.

Also, the features may be automatically selected as previously described with respect to image segmentation block 30. In general, CPU 24 is used to initially program the desired image processing features and parameters, as well as to update the feature selections during real-time processing of the video. In an alternative embodiment the data for each pixel of image information may have an associated identifier or token to control the image processing operations performed thereon.

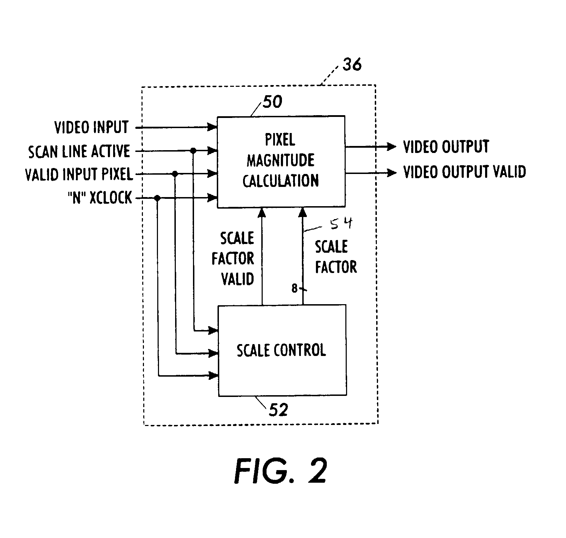

Referring now to Figure 2, which illustrates the two primary components of the image scaling system, pixel magnitude calculator 50 operates on the corrected and processed video received by 1-D block 36 from 2-D filter block 34. Along with the video or image pixel input, calculator 50 also receives synchronization signals, which are generally used to synchronize the operation of components on the video path, not only 1-D block 36, but also other components that may be included in image processing module 20. In addition, calculator 50 also receives a scale factor valid signal from scale control block 52. The scale factor valid signal is emitted from scale control block 52 whenever a valid scale factor is available on data lines 54, indicating that an interpolated pixel should be produced. In the illustrated embodiment, the scale factor passed from scale control block 52 to calculator 50 is an eight-bit fraction. Magnitude calculator 50 operates in a continuous fashion, constantly updating the level of the output pixel in accordance with the video input signals and the scale factor.

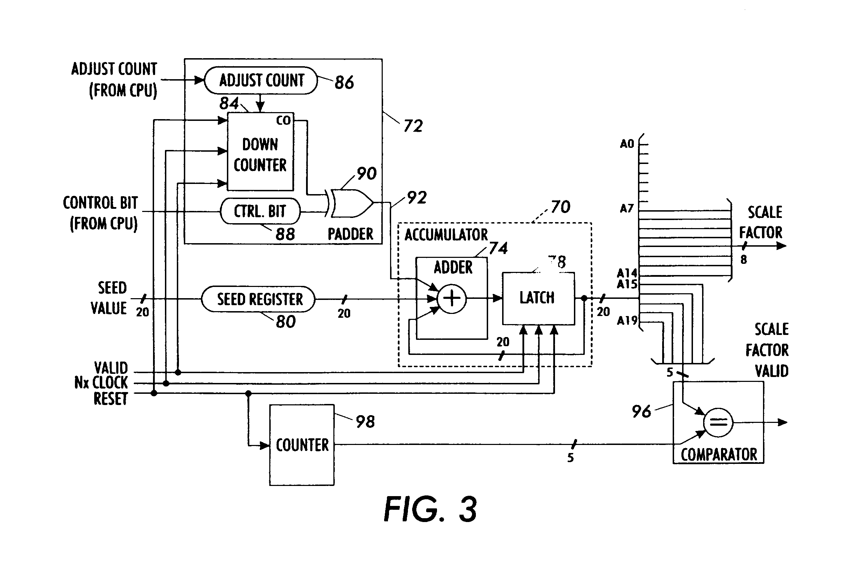

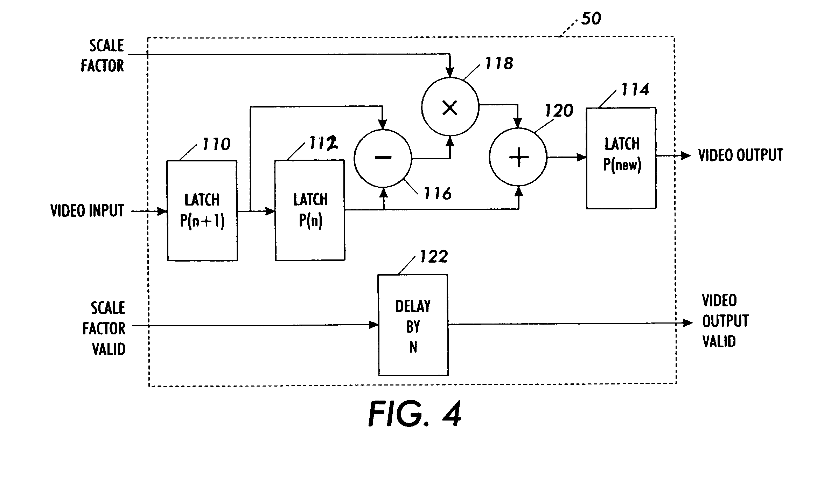

Figures 3 and 4 illustrate in more detail the operations of scale control block 52 and magnitude calculator 50, respectively. Referring initially to Figure 3, where the operative components of the scale control block are illustrated in detail, accumulator 70 is used to generate the scale factor as a function of the seed value and the output of padder 72, the 20-bit seed value being a binary representation of a 5-bit integer value and a 15-bit binary decimal value. In general, accumulator 70 adds, at adder 74, the previously accumulated seed values, as stored in latch 78, to the seed value input from register 80, along with the carry-in value output from padder 72. Portions of the output of accumulator 70 are subsequently used by the components remaining in the scale control block, or are passed to magnitude calculator 50 as the scale factor.

Driving scale control block 52 are a set of three signals, Valid, NxClock, and Reset (shown as Scan Line Active in Figure 2). The Reset signal is used to reinitialize the hardware within the scale control block at the beginning of each scanline of input data. The NxClock is a pulsed clocking signal used to synchronize various operations of the scale control block. In one embodiment, the NxClock is a clock that operates at three times the rate of the input data, or 3x. Finally, the Valid signal is one which triggers various operations within the scale control block. A Valid signal pulse is generated whenever a valid output pixel is generated by the interpolation hardware of the present invention. The valid signal, in combination with the NxClock signal is used to increment the counters and set the latches within the scale control block, thereby synchronizing the output of the continuously running digital components contained therein.

Operation of scale control block 52 begins with the storage of the digital seed value in seed register 80, which maintains the seed value determined as a function of the desired scaling ratio. Once stored in register 80, the seed value is then available for subsequent accumulation in accumulator 70. Generally, the seed value is accumulated once for each output pixel to produce the scale factor, which is output on accumulator lines A7 through A14. However, as previously described, generation of the seed value in this manner results in the introduction of error, due to the representation of the fractional portion of the seed value in a binary format. Hence, padder 72 is used to supplement, or pad, the accumulated value with a known bit stream to overcome the limitations of the binary fractions. Simply put, the padder outputs a signal to the accumulator in a specific pattern, to account for the problems inherent in binary fractions, thereby causing the accumulated sums to more accurately represent the fractional values intended.

In the present embodiment, padder 72 consists of resettable down-counter 84, count register 86, control-bit latch 88, and XOR gate 90. Down-counter 84 is decremented once for each valid input pixel, and thereby produces an active output on its carry-out (CO) pin whenever the count equals zero. Moreover, when the count reaches zero, the value in count register 86 is used to reload the down-counter. The carry-out signal from down-counter 84 is combined with the latched control-bit signal at XOR gate 90 to produce the padder output on line 92. Thus, depending on the state of the control-bit, as loaded by CPU 24 of Figure 1, padder 72 will output a bit-stream that reflects the output of the down-counter's carry-out (CO) pin, or its inverse.

The signal placed upon line 92 is generated in accordance with a pattern necessary to supplement the accumulated scale factor, which is accomplished by the input of the padder signal to the carry-in pin of adder 74. The pattern is generally determined as a function of the magnitude of the fractional portion of the seed value.

For example, the following pseudo-code could be used to generate the required down-counter reload value and the control-bit value. (This pseudo-code guarantees that the latch 78 is always less than or equal to the value it would be if the seed value had infinite precision. Note that this is not the minimum error value for all scaling ratios.):

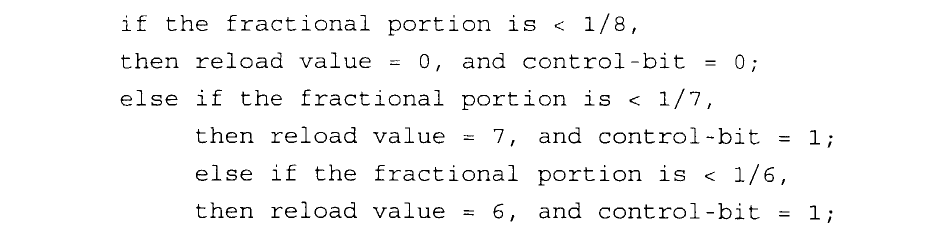

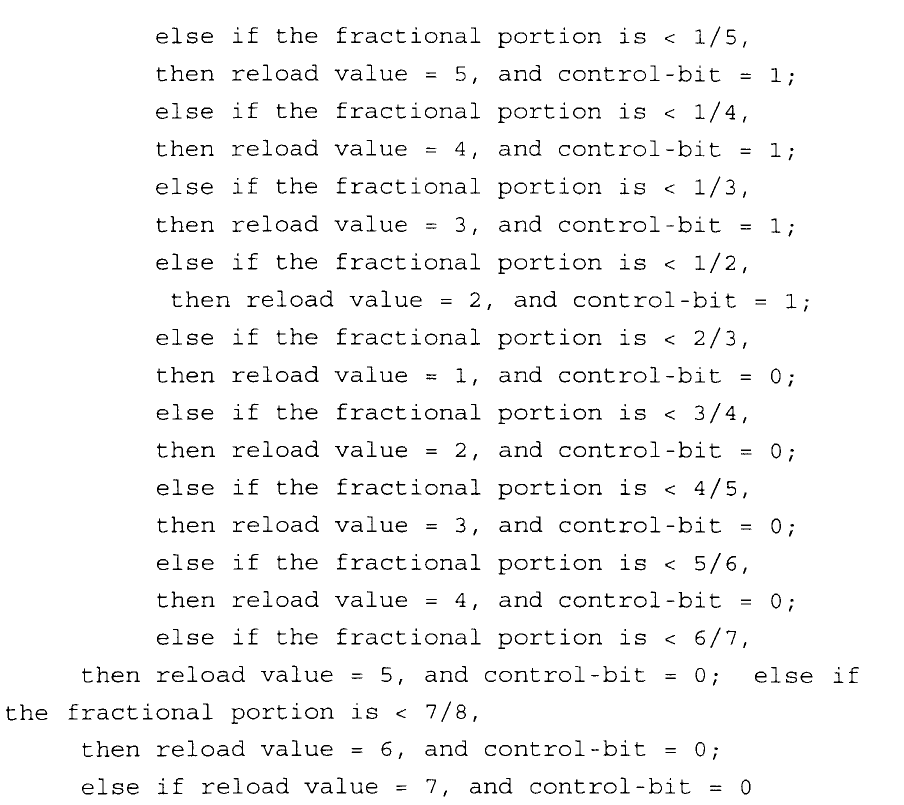

Hence, the padder output supplements the accumulated value in accordance with the seed fraction so that the value latched and subsequently output from accumulator 70 accurately represents what the actual accumulated seed value would be.

Subsequent to accumulation, the output of accumulator 70 is split and the five most significant bits of data, A15 through A19, are used by comparator 96 to determine if the scale factor contained on lines A7 through A14 is a valid scale factor. Comparator 96 compares the upper five bits of the accumulator output, which represents the integer portion of the seed value, with the value of pixel counter 98. Thus, comparator 96 produces an active scale factor valid signal whenever the incoming pixel count is equal to the integer portion of the accumulated seed value.

Referring next to Figure 4, which shows the details of magnitude calculator 50, the input pixel signals, Pₙ₊₁ and p_{n,} are successively latched at latches 110 and 112, respectively. Latch 112, containing signal Pₙ is the oldest of the two signals stored by calculator 50, while latch 110 contains the most recent signal received. The latched values are used to calculate the value of output pixel, P_{new}, which will be generated by the digital circuitry in magnitude calculator 50, and stored in output latch 114. Generation of the output value is accomplished by first determining the magnitude of the difference between the two input pixel signals at subtracter 116. The output of the subtracter, (Pₙ - Pₙ₊₁), is passed to multiplier 118, where it is multiplied by a scale factor output from scale control block 52. Subsequently, the product generated at multiplier 118 is passed to adder 120, where it is combined with Pₙ to produce the sum which is the new value to be used for the output pixel, P_{new} . Hence, P_{new} will be temporarily stored in latch 114, where it will be available as output video upon the rising edge of the next Video Output Valid signal, which is itself derived from the Scale Factor Valid signal provided by scale control block 52.

Generally, the Video Output Valid signal is generated by delaying the Scale Factor Valid signal in delay block 122 so as to keep the final output of adder 120, as stored in latch 114, in synchronization. Without such a synchronizing signal, it would be difficult to determine when to latch and output the new pixel value generated by the free-running magnitude calculator hardware.

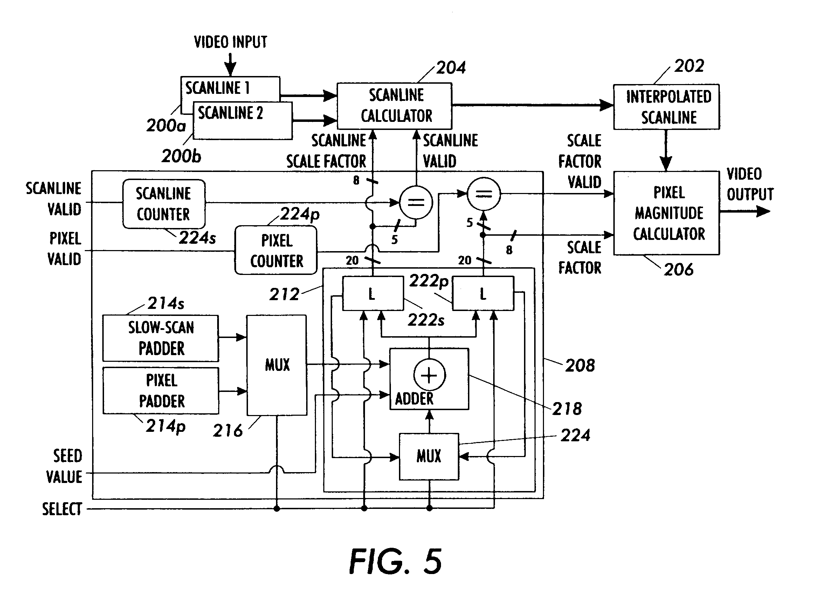

In an alternative embodiment, as illustrated in Figure 5, the present invention may be used to provide synchronization signals and scale factors for the interpolation of scanlines of image data, as well as, individual pixels. In such an embodiment, the two-dimensional scaling would be accomplished by a pair of interpolation operations, one acting on complete scanlines, the other on individual pixels within the scanlines. This alternative embodiment would require video memory sufficient for the storage of at least two scanlines of input video signals, 200a and 200b, and at least one scanline of output video signals, memory 202. However, while such an embodiment may require multiple interpolation operations to determine interpolated scanlines in one direction via scanline calculator block 204, and interpolated pixels in another via pixel calculator block 206, it is entirely possible for such a system to be implemented with only a single scale control block, 208.

In a manner similar to that previously described with respect to the interpolation of the individual pixel signals, the video scanlines may be scaled using a Scanline Scale Factor Valid signal to select the scanlines for interpolation, and a Scanline Scale Factor to carry out the calculation of the interpolated pixel values for all locations along the scanline, as illustrated by scanline calculator block 202, thereby producing a complete scanline of pixels where the scanline represents the scaled output in a slow-scan direction.

Subsequent to determining the values of all pixels in the interpolated scanline and storing them in scanline memory 202, the individual pixel values are passed to pixel magnitude calculator 206 and processed as previously described to produce output video which has been scaled in two dimensions.

The hardware necessary to generate the scale factors and scanline or pixel valid signals is contained within scale control block 208. Generally, this block operates as has been previously described, but, with the modification that both the inputs and outputs of accumulator 212 are multiplexed to allow for swapping between the generation of scaling output for the scanlines and the scaling output for the pixels. In some scanning systems, there is a slight delay between when the last pixel of a scanline is output and when the first pixel of the succeeding scanline is output. It is the intent of this embodiment to utilize that interline "dead time" to update the scanline scaling information using the same hardware that is used to generate the pixel scaling information. By multiplexing the inputs and outputs of an accumulator similar to that hereinbefore described, accumulator 212 can be used to produce the required dual scale control outputs.

Within scale control block 208, a pair of padder circuits, 214p and 214s are employed to generate the padder output for accumulator 212, for the pixel and scanline accumulations, respectively. Once again, padders 214p and 214s operate in the manner previously described with respect to the one dimensional implementation, where the output of 214p is dependent upon the number of output pixels processed within a scanline and the output of 214s is dependent upon the number of output scanlines processed within the image. Subsequently, the output from the padders would be multiplexed in MUX 216 which would control which of the padder output values was being passed to adder 218. Throughout scale control block 208, a select signal is used to control the selection of input values and the latching of output values, in accordance with the generation of a scanline or pixel scale factor.

Adder 218 accumulates the seed value which is common to both the fast-scan and slow-scan scaling operations, the output of one of the padders, 214p or 214s and the respective accumulator latch, 222p or 222s, as controlled by MUX 224. Once a sum is generated by adder 218, the output is latched in one of the two latches, 222p or 222s where the values are available for subsequent use. As previously described, the output values contained in latches 222p and 222s are split into fractional scale factors which are passed to the respective calculators, and into integer values. The integer values of latches 222p and 222s are compared against the pixel and scanline counts contained in counters 224p and 2224s, respectively. The comparisons, carried out in comparators 226p and 226s, result in the generation of the pixel valid and scanline valid signals when appropriate. Hence, a modified scale control block may be used to control the generation of scale factors and synchronization signals necessary for scaling an image in two dimensions.

Yet another alternative may employ a pair of interpolated scanline memories at memory 202 to allow the generation and storage of a scaled scanline in a first scanline memory, while using a second scanline memory to generate the scaled pixel or video output. Once the pixels in the second scanline memory have been exhausted, and the first memory is filled, the first and second memories would be swapped to allow a new scaled scanline to be input into the second memory and individual pixels to be read out of the first memory.

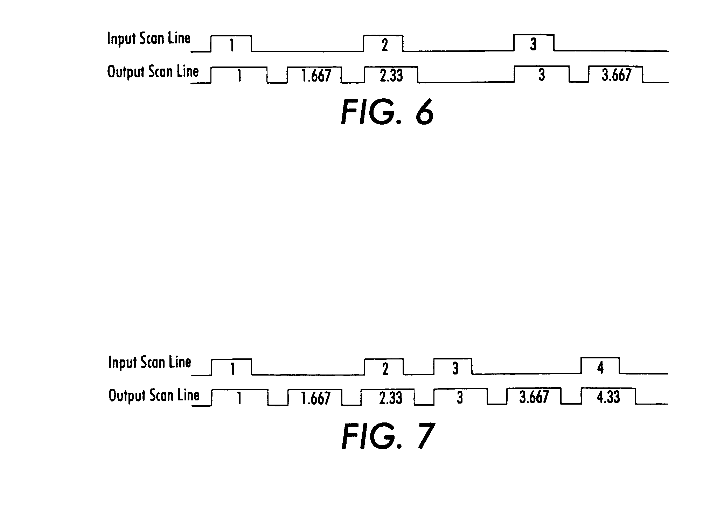

Conventionally, the circuits described above use a timing scheme wherein the input data rate is constant and slow enough to satisfy all cases as a function of fast scan and slowscan magnification factors. An example, of this timing scheme is illustrated in Figure 6.

As illustrated in Figure 6, during magnification, more output pixels are created in the fastscan direction and more output scanlines are created in the slowscan direction than input pixels and input scanlines, respectively. As previously noted, the image scaling techniques operated at a constant video rate which is made slow enough to satisfy all cases. In other words, although the image scaling system may be ready to accept the third input scanline, as illustrated in Figure 6, due to the constant video rate, the image scaling system must sit in a wait state. This waiting, due to a constant video rate, wastes valuable processing time.

The present invention eliminates this wasting of processing time by requesting the next input scanline when the output scanline is created. This timing sequence is illustrated in Figure 7. As illustrated in Figure 7, the next input scanline is requested when the output scanline is created. For example, in Figure 6, the third input scanline is not requested until well after the second output scanline is created, whereas in Figure 7, the third scanline is requested immediately upon the creation of the second output scanline. In comparing over an equal period of time, Figures 6 and 7 show that the present invention (Figure 7) can request 4 scanlines and begin the output of the fourth scanline, whereas the conventional process (Figure 6) is still producing the third scanline.

This enables the period of the input scanline can be varied to generate a synchronous output scanline operation. The evaluation process is done in advance to determine when the next input line is requested. As soon as the output scanline is finished for a given input scanline, the input line request signal becomes activated to tell the input process to send the next line data. The line request can be used with an asynchronous scanner or synchronous scanner with a memory buffer to increase the efficiency of scanning/processing video when two-dimensional scaling is required.

In addition, it should also be noted that the present invention is not intended to be limited to any of the embodiments described herein, and may include alternative arrangements of the elements of the present invention to accomplish either one or two-dimensional interpolated scaling. For example, the above described two-dimensional embodiment may not be suitable for the implementation of anamorphic scaling without minor modifications to enable a second value to be utilized, yet such a modification is intended to be well within the scope of the present invention.

Moreover, the present invention may be implemented with programmable logic circuits, application specific integrated circuits (ASICs), in software, or in a combination of software and hardware.

In recapitulation, the present invention implements a timing scheme for requesting the input scanline which reduces the non-processing time of the image scaling system.

## Claims

1. An image processing system for scaling the size of an image represented by a plurality of input video signals, by a desired scaling ratio, so as to represent the image with a plurality of output video signals different in number than the input video signals, comprising:
control means (52) for producing a scale factor and a scale factor valid signal; and
video signal magnitude calculating means (50), responsive to the scale factor and scale factor valid signal from said control means (52), for producing an output video signal as a function of at least one input video signal;
said control means (52) requesting a next input scanline to be received by said video signal magnitude calculating means (50) when said video signal magnitude calculating means produces the output video signal so as to transfer input scanlines to said video signal magnitude calculating means at a non-constant video rate.

2. A method for efficiently scaling the size of an image represented by a plurality of input video signals, comprising the steps of:
(a) producing a scale factor and a scale factor valid signal;
(b) producing an output video signal as a function of at least one input video signal based on the scale factor and scale factor valid signal; and
(c) requesting a next input scanline to be scaled when the output video signal is produced so as to transfer input scanlines for scaling at a non-constant video rate.
